# EUROPEAN PATENT APPLICATION

(11) **EP 4 064 061 A1**
(43) Date of publication of application: **28.09.2022**
(21) Application number: 20890470.6
(22) Date of filing: 09.11.2020
(51) Int. Cl.: G06F 13/00, H04N 21/854

(54) **DATA PROCESSING DEVICE, CONTROL METHOD THEREFOR, AND PROGRAM**

(30) Priority: 22.11.2019 JP 2019211706
(71) Applicant: Canon Kabushiki Kaisha, Ohta-ku Tokyo 146-8501 (JP)
(72) Inventor: SUNEYA, Toru, Tokyo 146-8501 (JP)
(74) Representative: Canon Europe Limited
(86) International application number: PCT/JP2020/041753
(87) International publication number: WO 2021/100524

(57) **Abstract**

A data processing apparatus analyzes a file of a predetermined format including a plurality of contents and acquires the plurality of contents and relation information representing a relationship between the plurality of contents, stores the plurality of acquired contents, generates a playlist that describes acquisition information used to individually acquire the plurality of contents stored, and transmits the playlist to an external apparatus and transmits, to the external apparatus, content that the external apparatus requests using the acquisition information included in the playlist.

## Description

### TECHNICAL FIELD

The present invention relates to a data processing apparatus and a method of controlling the same, and a program.

### BACKGROUND ART

In recent years, MPEG-DASH (Dynamic Adaptive Streaming over Http) standardized by ISO has proliferated as a technique of performing streaming distribution of video data by HTTP (Hypertext Transfer Protocol). More specifically, a transmitting apparatus divides video data into segments of a predetermined time length, and describes a URL (Uniform Resource Locator) used to acquire a segment in a file called a playlist. A receiving apparatus first acquires the playlist, requests a desired segment from the transmitting apparatus using information described in the playlist, and acquires the segment. Also, PTL 1 discloses a configuration for acquiring video data using MPEG-DASH in which a receiving apparatus selects and receives a desired segment in a plurality of segments generated by temporally and spatially dividing an image included in video data.

### CITATION LIST

### PATENT LITERATURE

PTL 1: Japanese Patent Laid-Open No. 2016-9925

### SUMMARY OF INVENTION

### TECHNICAL PROBLEM

In the MPEG-DASH, however, only distributing a moving image (video data) as encoded data is assumed, and distributing a still image is not assumed. In PTL 1, segments obtained by temporally and spatially dividing one moving image file are distributed. However, when distributing a file, for example, an HEIF file that can include a plurality of images in one file, it is impossible to distribute individual images. Note that HEIF is short for High Efficiency Image File Format. Also, in this specification, "image" is a generic term for a moving image and a still image. Hence, for example, even if a plurality of still images are stored in an HEIF file held in a content server, and a receiving apparatus needs only some of the still images in the HEIF file, the receiving apparatus needs to download the whole HEIF file.

One aspect of the present invention provides a technique for enabling distribution of a desired image of a plurality of images stored in one file.

### SOLUTION TO PROBLEM

A transmitting apparatus according to one aspect of the present invention has the following configuration. That is, there is provided an apparatus comprising:
acquiring means for analyzing a file of a predetermined format including a plurality of contents and acquiring the plurality of contents and relation information representing a relationship between the plurality of contents;
storage means for storing the plurality of contents acquired by the acquiring means;
generating means for generating a playlist that describes acquisition information used to individually acquire the plurality of contents from the storage means and the relation information; and
communicating means for transmitting the playlist to an external apparatus and transmitting, to the external apparatus, content that the external apparatus requests using the acquisition information included in the playlist.

### ADVANTAGEOUS EFFECTS OF INVENTION

According to the present invention, there is provided a technique for enabling distribution of a desired still image of a plurality of still images stored in one file.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

Fig. 1 is a view showing the configuration of a communication system according to the embodiment;
Fig. 2 is a block diagram showing an example of the functional configuration of a transmitting apparatus according to the embodiment;
Fig. 3 is a flowchart showing an example of HEIF file analysis processing according to the embodiment;
Fig. 4 is a view showing an example of a playlist generated by the transmitting apparatus;
Fig. 5 is a view showing an example of a playlist generated by the transmitting apparatus;
Fig. 6 is a view showing an example of a playlist generated by the transmitting apparatus;
Fig. 7 is a view showing an example of a playlist generated by the transmitting apparatus;
Fig. 8 is a view showing an example of a playlist generated by the transmitting apparatus;
Fig. 9 is a view showing an example of a playlist generated by the transmitting apparatus;
Fig. 10A is a view showing an example of a playlist generated by the transmitting apparatus;
Fig. 10B is a view showing an example of a playlist generated by the transmitting apparatus;
Fig. 11 is a view showing an example of a playlist generated by the transmitting apparatus;
Fig. 12 is a view showing an example of a playlist generated by the transmitting apparatus;
Fig. 13 is a view showing an example of a playlist generated by the transmitting apparatus;
Fig. 14 is a view showing an example of a playlist generated by the transmitting apparatus;
Fig. 15 is a view showing an example of a playlist generated by the transmitting apparatus;
Fig. 16A is a view showing an example of a playlist generated by the transmitting apparatus;
Fig. 16B is a view showing an example of a playlist generated by the transmitting apparatus;
Fig. 17 is a block diagram showing an example of the functional configuration of a receiving apparatus according to the embodiment;
Fig. 18 is a flowchart showing an example of a reception processing by the receiving apparatus; and
Fig. 19 is a block diagram showing an example of the hardware configuration of the transmitting apparatus according to the embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### <First Embodiment>

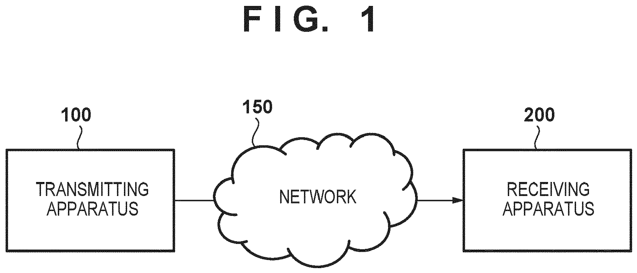

Fig. 1 shows an example of the overall configuration of a communication system according to the first embodiment. A transmitting apparatus 100 is an example of a data processing apparatus for distributing a file of a predetermined format, and is connected to a receiving apparatus 200 via a network 150. The transmitting apparatus 100 performs streaming distribution of image data by the HTTP protocol. The transmitting apparatus 100 can perform streaming distribution of a desired image of a plurality of images included in one file, as will be described later. Note that there may exist a plurality of transmitting apparatuses 100 and a plurality of receiving apparatuses 200. Detailed examples of the transmitting apparatus 100 are a camera apparatus, a video camera apparatus, a smartphone, a portable telephone, a PC apparatus, and a cloud server apparatus. However, the transmitting apparatus 100 is not limited to these examples if it satisfies a functional configuration to be described later. The receiving apparatus 200 is a data processing apparatus having a content reproduction/display function, a communication function, and a function of accepting input from a user. Detailed examples of the receiving apparatus 200 are a smartphone, a portable telephone, a PC apparatus, and a TV. However, the receiving apparatus 200 is not limited to these if it has a functional configuration to be described later.

The network 150 communicably connects the transmitting apparatus 100 and the receiving apparatus 200. Examples of the network 150 are a wired LAN (Local Area Network) and a wireless LAN (Wireless LAN). However, the network 150 is not limited to these, and may be, for example, the Internet, a WAN (Wide Area Network) such as 3G/4G/LTE/5G, an ad hoc network, or Bluetooth.

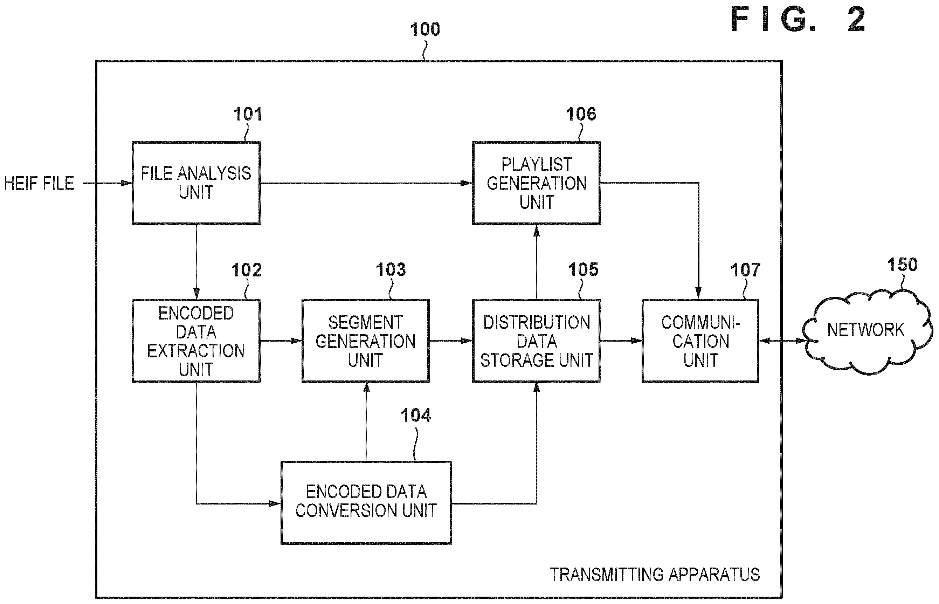

The functional configuration of the transmitting apparatus 100 according to the first embodiment will be described next with reference to Fig. 2. Fig. 2 is a block diagram showing an example of the functional configuration of the transmitting apparatus 100 according to the first embodiment.

In a file analysis unit 101 and an encoded data extraction unit 102, a file of a predetermined format including a plurality of contents is analyzed to acquire the plurality of contents and relation information representing the relationship between the plurality of contents. In this embodiment, the predetermined format is, for example, an HEIF (High Efficiency Image File Format) file. The relation information is the relationship between a still image and a thumbnail image, the relationship between a derived image and an image constituting that, or the like. The file analysis unit 101 acquires an HEIF file and analyzes its structure. The encoded data extraction unit 102 extracts the encoded data of the contents stored in the HEIF file based on the analysis result of the HEIF file. A segment generation unit 103 converts the encoded data extracted by the encoded data extraction unit 102 into a time length or a bit rate suitable for communication as needed, thereby generating a segment that stores encoded data. An encoded data conversion unit 104 converts the extracted encoded data into a different encoding format as needed. Note that the segment generation unit 103 also has a function of generating a segment that stores the encoded data generated by the encoded data conversion unit 104.

A distribution data storage unit 105 stores the plurality of contents acquired in the above-described way such that an external apparatus (the receiving apparatus 200 in the example of this embodiment) can individually acquire these. More specifically, the distribution data storage unit 105 stores the data generated by the segment generation unit 103 and the encoded data conversion unit 104. A playlist generation unit 106 generates a playlist in which acquisition information (a URL (Uniform Resource Locator) in this embodiment) used to individually acquire the plurality of contents from the distribution data storage unit 105 and the above-described relation information are described. More specifically, based on the analysis result of the HEIF file, the playlist generation unit 106 generates a playlist in which a URL that enables access to the data stored in the distribution data storage unit 105 is described. Details of the relation information will be described later. In response to a request from the receiving apparatus 200 that is an external apparatus, a communication unit 107 transmits the generated playlist, the distribution data, and the like to the receiving apparatus 200 via the network 150.

The functional units as described above can be implemented by one or a plurality of CPUs executing predetermined programs stored in one or a plurality of memories and controlling. Note that some or all of the above-described functional units may be implemented by dedicated hardware.

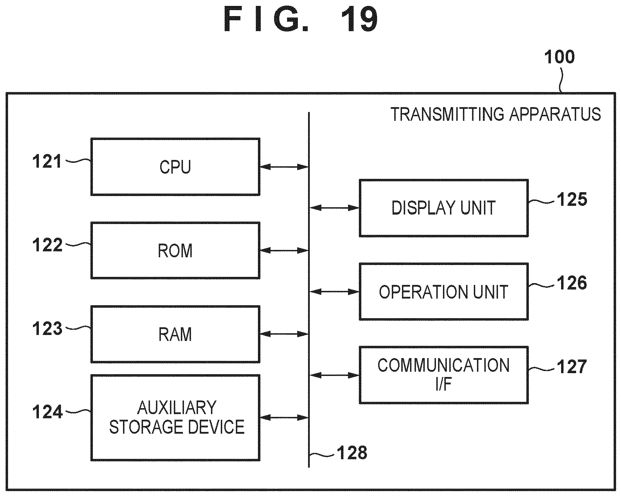

The hardware configuration of the transmitting apparatus 100 according to the embodiment will be described here with reference to the block diagram of Fig. 19. The transmitting apparatus 100 includes a CPU 121, a ROM 122, a RAM 123, an auxiliary storage device 124, a display unit 125, an operation unit 126, a communication I/F 127, and a bus 128.

The CPU 121 controls the whole transmitting apparatus 100 using computer programs and data stored in the ROM 122 or the RAM 123, thereby implementing the functions of the transmitting apparatus 100 shown in Fig. 2. Note that the transmitting apparatus 100 may include one or a plurality of pieces of hardware different from the CPU 121, and dedicated hardware may execute at least part of the processing of the CPU 121. Examples of the dedicated hardware are an ASIC (Application Specific Integrated Circuit), an FPGA (Field Programable Gate Array), and a DSP (Digital Signal Processor). The ROM 122 stores programs and the like, which do not need a change. The RAM 123 temporarily stores programs and data supplied from the auxiliary storage device 124 and data supplied from the outside via the communication I/F 127. The auxiliary storage device 124 is formed by, for example, a hard disk drive or the like, and stores various kinds of data (files) such as image data and audio data as the transmission target to the receiving apparatus 200.

The display unit 125 is formed by, for example, a liquid crystal display, an LED, or the like, and displays a GUI (Graphical User Interface) or the like used by the user to operate the transmitting apparatus 100. The operation unit 126 is formed by, for example, a keyboard, a mouse, a joystick, a touch panel, or the like, and inputs various kinds of instructions to the CPU 121 when operated by the user. The CPU 121 operates as a display control unit configured to control the display unit 125 and an operation control unit configured to control the operation unit 126.

The communication I/F 127 is used for communication between the transmitting apparatus 100 and an external apparatus (for example, the receiving apparatus 200). In this embodiment, the communication I/F 127 is an interface connected to the network 150. If the transmitting apparatus 100 is connected to the network 150 by wire, a cable for communication is connected to the communication I/F 127. If the transmitting apparatus 100 is wirelessly connected to the network 150, the communication I/F 127 includes an antenna. The bus 128 connects the units of the transmitting apparatus 100 and transmits information.

Note that in this embodiment, the auxiliary storage device 124, the display unit 125, and the operation unit 126 exist inside the transmitting apparatus 100. However, at least one of these may exist as another device outside the transmitting apparatus 100 or may be omitted.

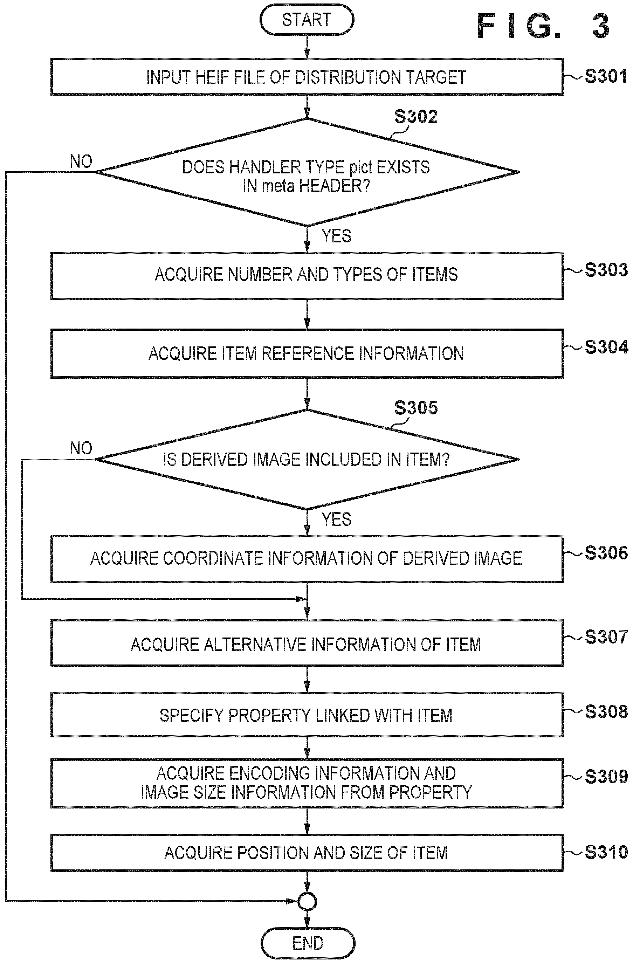

The procedure of processing for analyzing an HEIF file in the transmitting apparatus 100 according to this embodiment will be described next with reference to Fig. 3. Fig. 3 is a flowchart showing an example of HEIF file analysis processing by the file analysis unit 101.

First, in step S301, the file analysis unit 101 acquires an HEIF file as a distribution target. Next, in step S302, the file analysis unit 101 confirms whether handler type pict exists in the metaheader of the HEIF file. Upon determining that pict handler does not exist (NO in step S302), the file analysis unit 101 ends the processing without performing analysis any more. On the other hand, upon determining that pict handler exists (YES in step S302), in step S303, the file analysis unit 101 acquires the number and types of items stored in the HEIF file. Note that in the HEIF file, contents such as stored images and metadata associated with the images are called items.

Next, in step S304, the file analysis unit 101 acquires reference information between the items. For example, the HEIF file stores reference information representing the relationship between a still image and a thumbnail image thereof. The HEIF file can also store images used to generate one image by combining a plurality of images. The one image generated by combining the plurality of images is called a derived image. In the HEIF, if a derived image is included as an item, reference information representing the relationship between the derived image and a plurality of images that form the derived image is stored in the HEIF file. In addition, to generate the derived image, pieces of information of positions to arrange the plurality of images are needed. Hence, if a derived image is included in the items of the HEIF file (YES in step S305), in step S306, the file analysis unit 101 acquires coordinate information used to generate the derived image. Note that if no derived image is included in the items of the HEIF file (NO in step S305), step S306 is skipped. Handling of a derived image will be described in more detail in the second embodiment.

In step S307, the file analysis unit 101 acquires the alternative information of an item from the HEIF file. As a detailed case of setting of alternative information, for example, if a derived image cannot be displayed, an image to be displayed in place of that is designated. An alternative image will be described in more detail in the second embodiment. Next, in step S308, the file analysis unit 101 specifies a property linked with each item. Detailed examples of the property are encoding information of an item and rectangular size information. Next, in step S309, the file analysis unit 101 acquires encoding information and the rectangular size information of the image from the specified property. Next, in step S310, the file analysis unit 101 acquires the position and the size information of the item in the HEIF file.

Based on the position and size information of the item acquired by the file analysis unit 101 in the above-described way, the encoded data extraction unit 102 extracts the item from the HEIF file. The encoded data conversion unit 104 converts the extracted encoded data into a different encoding format as needed. For example, if the encoding format before data conversion is HEVC, the encoded data conversion unit 104 converts this into JPEG as needed. Acquisition information can include a URL capable of acquiring the data converted into the different encoding format. The segment generation unit 103 generates a segment from the encoded data extracted by the encoded data extraction unit 102 and the encoded data converted by the encoded data conversion unit 104, and stores the segment in the distribution data storage unit 105. Using the reference information, encoding information, image size information, and the like acquired by the file analysis unit 101, the playlist generation unit 106 generates a playlist used by the receiving apparatus 200 to access the segment stored in the distribution data storage unit 105.

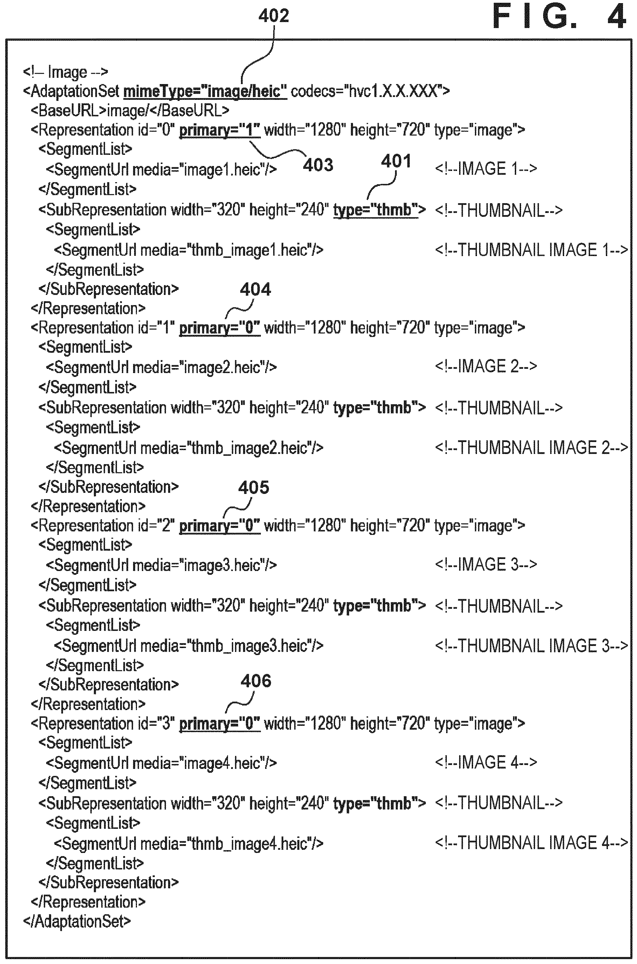

Examples of a playlist generated by the transmitting apparatus 100 according to the first embodiment will be described next with reference to Figs. 4 to 9. Fig. 4 shows an example of a playlist generated by the transmitting apparatus according to an embodiment of the present invention, and shows a description example that enables distribution of an HEIF file storing a plurality of images. The playlist shown in Fig. 4 includes, as acquisition information, the URLs of four still images and four thumbnail images, and includes, as relation information, information representing the correspondence between the still images and the thumbnail images.

The playlist in Fig. 4 shows a part of an MPD (Media Presentation Description) used for distribution in MPEG-DASH. Referring to Fig. 4, the playlist shows that four images and the thumbnail images of the images can be acquired. In Fig. 4, each image is described as Representation, and each thumbnail image is described as SubRepresentation. Concerning each thumbnail image, a type "thmb" representing a thumbnail image is described, as indicated by a type attribute 401. Note that for each image, "image" is described as a type attribute. The relationship between an image and a thumbnail image is represented by the relationship between Representation and SubRepresentation.

Also, in Fig. 4, a mime type 402 (mimeType) indicates the mime type of the four images and the thumbnail images below Representation. In the example shown in Fig. 4, the mime type 402 indicates that the file is an HEIF file that stores images encoded by HEVC (image/heic). That is, if a plurality of images are stored in the HEIF file to be distributed, the transmitting apparatus 100 generates HEIF files each storing only one image anew. The re-encapsulation into an HEIF file is performed by the segment generation unit 103, and the generated HEIF file is stored in the distribution data storage unit 105.

Also, in Fig. 4, primary attributes 403 to 406 are described as the attributes of Representation. A primary attribute is information representing the priority between a plurality of items (images), and is an example of relation information. In the HEIF file, if a plurality of images are stored, an item to be preferentially displayed or printed can be designated. In the example shown in Fig. 4, the value of the primary attribute 403 is set to "1", and the values of the remaining primary attributes 404, 405, and 406 are set to "0". This indicates that the image for which the primary attribute value "1" is set is a primary image.

Note that in the HEIF file, since one item identifier is designated as information representing a primary item, expression by an MPD can be implemented by setting the value of one primary attribute to "1", as described above. Note that instead of using two levels of "0" and "1", when "0" is set to the highest priority, and the priority is lowered as the value becomes large to "1", "2",..., priorities of three or more levels can easily be expressed.

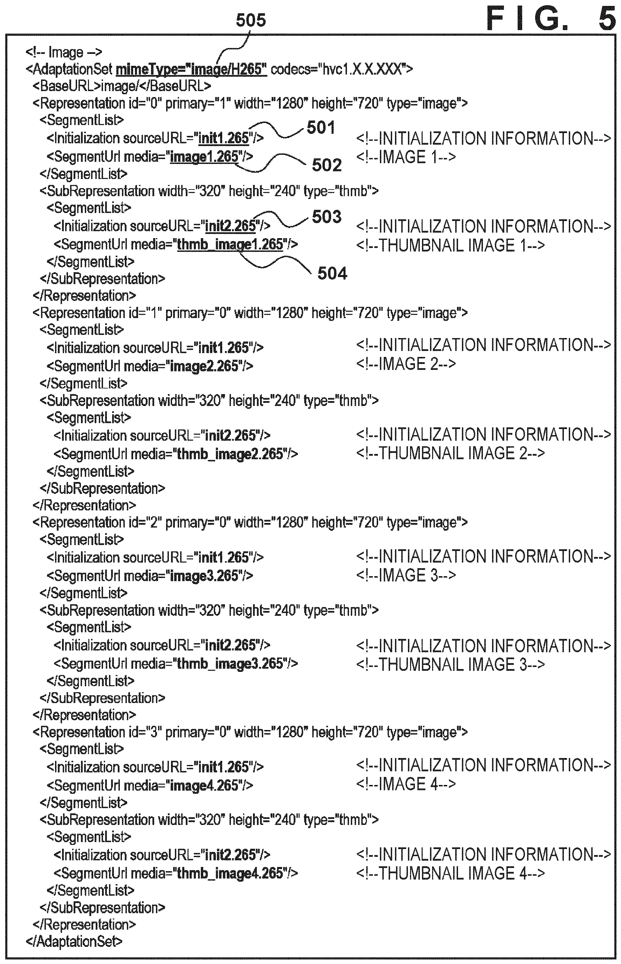

Another example of the playlist will be described next with reference to Fig. 5. In the example shown in Fig. 4, a case in which each of the plurality of images stored in the input HEIF file is re-encapsulated by the transmitting apparatus 100 as an HEIF file that stores only one image has been described. Fig. 5 shows a case in which re-encapsulation is not performed. If re-encapsulation is not performed, encoded data obtained by encoding content and decode information necessary for decoding of the encoded data are separately stored for each of a plurality of contents (a plurality of images in this example). Acquisition information used to acquire these includes information used to acquire the encoded data from the distribution data storage unit 105, and information used to acquire the decode information from the distribution data storage unit 105. Fig. 5 shows an example of a playlist generated by the transmitting apparatus 100 according to the first embodiment, and particularly shows another description example that enables distribution of an HEIF file storing a plurality of images.

Referring to Fig. 5, initialization information 501 is an example of decode information necessary for decoding the first image encoded by HEVC, and image data 502 is the HEVC encoded data of the first image. That is, initialization information and encoding information extracted from the input HEIF file can directly be acquired without being encapsulated. Similarly, initialization information 503 and image data 504 are the initialization information and the encoding information of the thumbnail image of the first image.

Note that a mime type 505 shown in Fig. 5 is described as "image/H265". As the sub-type of an image, "H265" has not been approved by the IANA (Internet Assigned Number Authority). However, if re-encapsulation is unnecessary, as shown in Fig. 5, data extracted from the input HEIF file can directly be used. Hence, the processing of the transmitting apparatus 100 can be simplified. That is, in the description example shown in Fig. 5, the segment generation unit 103 need not encapsulate an extracted image item into an HEIF file anew.

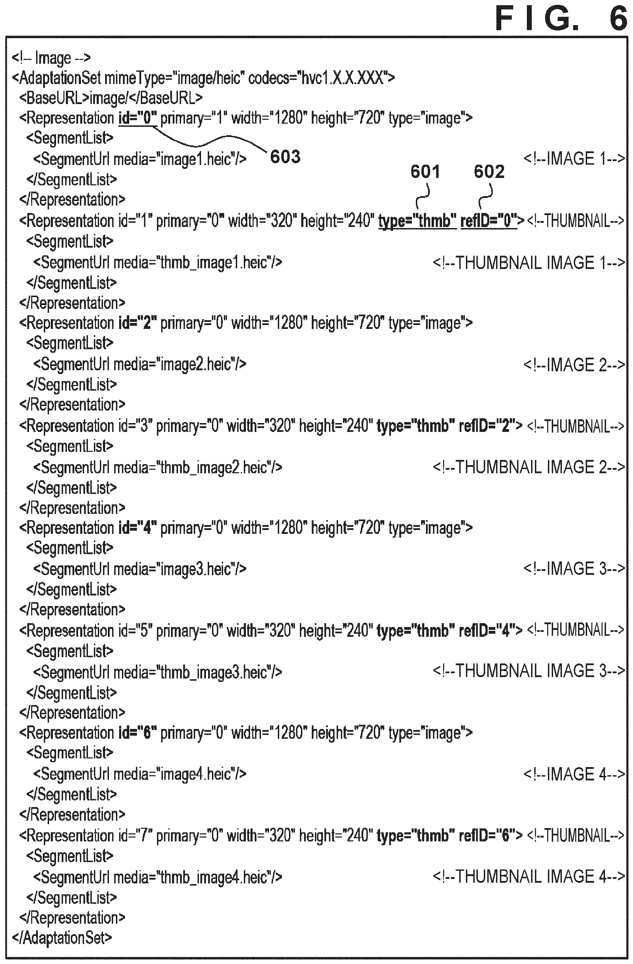

In Figs. 4 and 5 described above, a thumbnail image is described as SubRepresentation in Representation of an image, thereby representing the relationship between the image and the thumbnail image. That is, this is an example in which the relationship between Representation and SubRepresentation corresponds to the relation information between the images. A case in which a thumbnail image is described as Representation will be described next with reference to Fig. 6. Fig. 6 shows an example of a playlist generated by the transmitting apparatus 100 according to the first embodiment, and particularly shows a description example of a playlist that enables distribution of an HEIF file storing a plurality of images.

Referring to Fig. 6, a type attribute 601 of Representation indicates a thumbnail. When "0" that is the value of an identifier 603 of Representation of the base image of the thumbnail is described in a reference identifier 602 of Representation, it is possible to indicate that this thumbnail is the thumbnail of the image for which the identifier of Representation is "0". That is, the reference identifier 602 is an example of relation information representing the relationship between images. In Fig. 6, similarly, a thumbnail image is described as Representation for each of the four images.

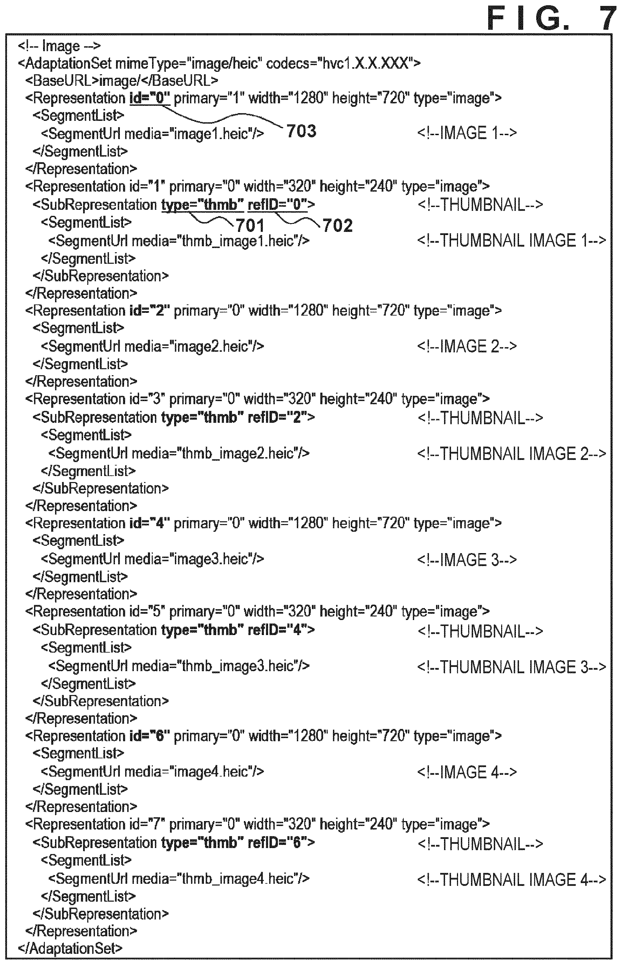

A description example of a playlist for combinations of a plurality of images and thumbnail images will be described with reference to Fig. 7. Fig. 7 shows an example of a playlist generated by the transmitting apparatus 100 according to the first embodiment, and particularly shows a description example of a playlist that enables distribution of an HEIF file storing a plurality of images.

Referring to Fig. 7, a thumbnail image is described as SubRepresentation of Representation different from the base image. A type attribute 701 (type=thmb) of SubRepresentation indicates a thumbnail image, and a reference identifier 702 describes the value of an identifier 703 of Representation of the base image.

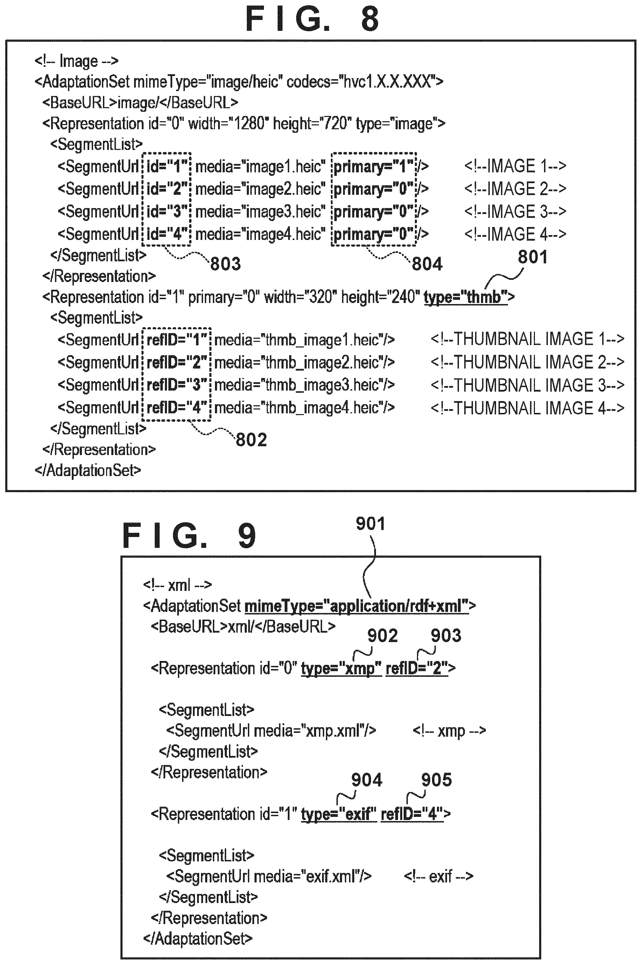

In the first embodiment, all the above description examples of an MPD describe a plurality of images and thumbnail images thereof. A case in which the description amount is decreased by collectively describing identical attribute values will be described with reference to Fig. 8. When the description amount of a playlist is decreased, time necessary for transmission/reception of the playlist is decreased. Fig. 8 shows an example of a playlist generated by the transmitting apparatus 100 according to the first embodiment, and particularly shows a description example in which the description amount of an MPD can be decreased when enabling distribution of an HEIF file storing a plurality of images and the thumbnail images thereof.

Referring to Fig. 8, four images having the same attribute information are described as different segments of one Representation. Similarly, four thumbnail images having the same attribute information are also described as different segments of one Representation. In the Representation that describes the thumbnail images, a type attribute 801 indicates the thumbnail images. In addition, when an identifier 803 of a base image is described by a reference identifier 802 of each segment representing a thumbnail image, the thumbnail image and the original image can be linked. Furthermore, when a primary attribute 804 is described for each segment representing an image, as shown in Fig. 8, a primary item can also be identified.

A case in which as an item other than an image, metadata such as EXIF is described in an MPD will be described next with reference to Fig. 9. Fig. 9 shows an example of a playlist generated by the transmitting apparatus 100 according to the first embodiment, and particularly shows a description example of a playlist in a case in which metadata such as EXIF is described in an MPD.

Referring to Fig. 9, items described in an MPD are XMP (Extensible Metadata Platform) and EXIF. A mime type 901 indicates that the data format of these metadata is XML. In the first Representation shown in Fig. 9, a type attribute 902 indicates XMP, and a reference identifier 903 describes the identifier of an image accompanied by the XMP. In another Representation, a type attribute 904 indicates EXIF. The example shown in Fig. 9 indicates that information obtained by converting the information of EXIF into the XML format can be acquired, and a reference identifier 905 represents the identifier of an image accompanied by the EXIF.

As described above, according to the first embodiment, it is possible to distribute a desired image of a plurality of images stored in one HEIF file.

### <Second Embodiment>

In the first embodiment, a playlist that enables distribution of an HEIF file storing a plurality of images has been described. In the second embodiment, a case in which a derived image or an alternative image of HEIF is described in an MPD will be described. Note that the configuration and operation of a transmitting apparatus 100 serving as a communication system and a data processing apparatus according to the second embodiment are the same as in the first embodiment (Figs. 1, 2, and 3). In the second embodiment, a description concerning a derived image acquired in step S306 of Fig. 3 will particularly be exemplified.

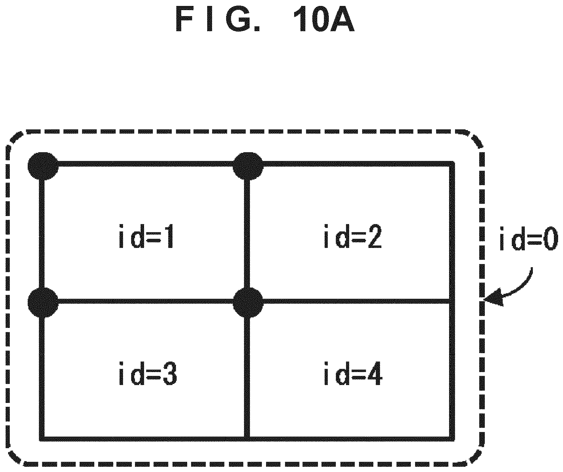

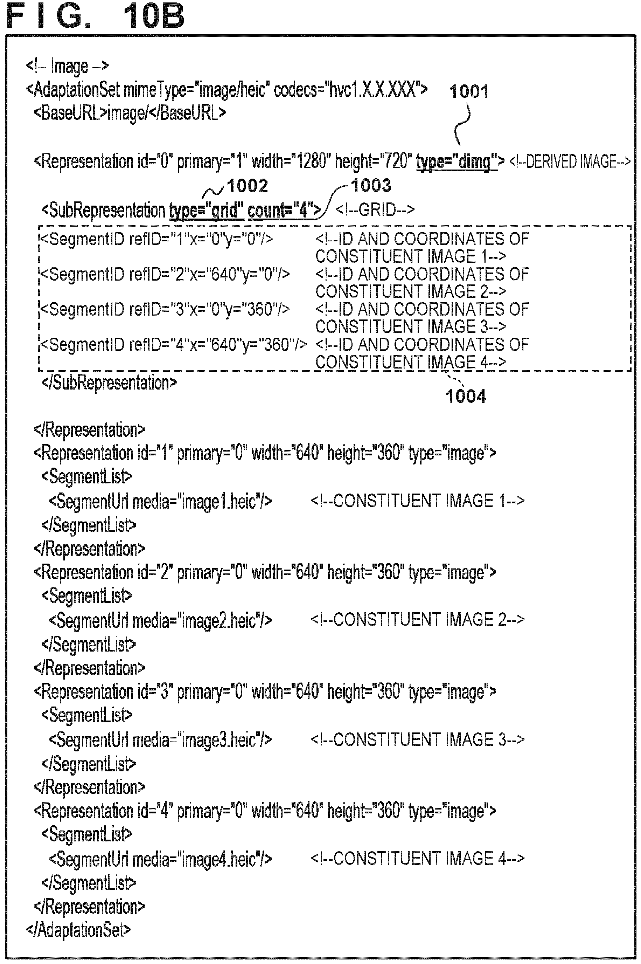

Fig. 10A is a view showing an example of the configuration of a derived image. Also, Fig. 10B shows an example of a playlist generated by the transmitting apparatus 100 according to the second embodiment, and particularly shows a description example in which a derived image that generates one image by combining a plurality of images is described in an MPD.

As shown in Fig. 10A, the derived image exemplified in this embodiment is a grid image generated by arranging two of four images (images of id=1 to id=4) in each of the vertical and horizontal directions. The derived image and the four images forming the derived image are described as Representation in the playlist shown in Fig. 10B. In Representation of the derived image, "dimg" that is a type indicating a derived image is described in a type attribute 1001. In addition, "grid" indicating a grid image that is a detailed type of the derived image is described in a type attribute 1002 of SubRepresentation included in Representation of the derived image. Furthermore, "4" that is the number of images forming the grid image is described in a count attribute 1003.

Also, as segments below SubRepresentation, four pieces of segment information 1004 forming the derived image (grid image) are described. Each segment of the segment information 1004 describes, as a reference identifier, the identifier of Representation including the constituent image (= segment), thereby explicitly indicating which image forms the derived image. Also, as information representing the position of each segment, coordinate information indicating the position to display the segment is described in the segment information 1004. Note that in Fig. 10B, the coordinates of the upper left corner are described as the coordinate information. However, the information representing the coordinates may be the coordinates of the lower right corner or center because the information need only specify the display position of each image in the grid image.

Concerning the derived image of HEIF, types other than grid also exist. In particular, an overlay image can be expressed by the same description method as the grid image. To generate and display an overlay image as a derived image, not only the coordinate information of the images forming the derived image but also layer information representing the order of overlaying these is necessary. The layer information can be described as, for example, one of the pieces of attribute information of the segments described in the segment information 1004. Alternatively, the order of the segments described in the segment information 1004 may indicate the order of layers.

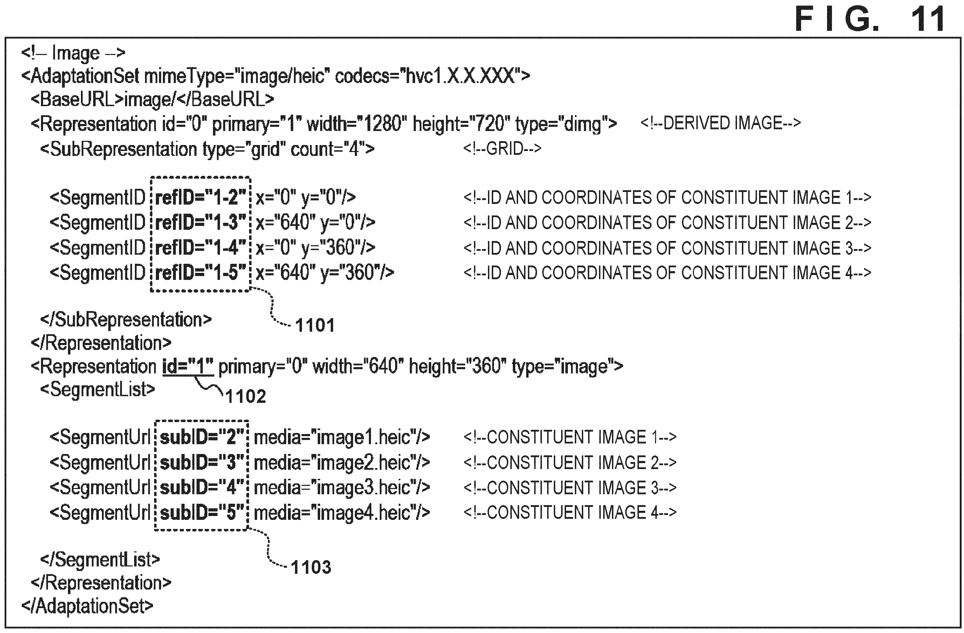

The playlist described with reference to Fig. 10B, which decreases the description amount of the derived image, will be described next with reference to Fig. 11. Fig. 11 shows another example of the playlist generated by the transmitting apparatus 100 according to the second embodiment, and particularly shows a description example in which the description amount of an MPD is decreased when enabling distribution of a derived image that generates one image by combining a plurality of images.

Referring to Fig. 11, the description concerning the derived image is the same as in the example shown in Figs. 10A and 10B. That is, the image is identified by the type attribute ("dimg") of Representation, and the detailed type of the derived image and the number of segments forming the derived image are indicated by the type attribute ("grid") and the count attribute ("4") of SubRepresentation. On the other hand, for the constituent images forming the derived image, as in the playlist shown in Fig. 8 described in the first embodiment, constituent images having the same attribute information are put into one Representation, thereby decreasing the description amount. However, when the constituent images are put into one Representation, the identifier of Representation to be referred to by the segment information of the derived image is the same between the constituent images. In this embodiment, an identifier 1102 of Representation in which the constituent images are put and an auxiliary identifier 1103 of each segment that is a constituent image are described in combination in a reference identifier 1101 described in the segment forming the derived image. In Fig. 11, the two identifiers are described using a hyphen that connects these.

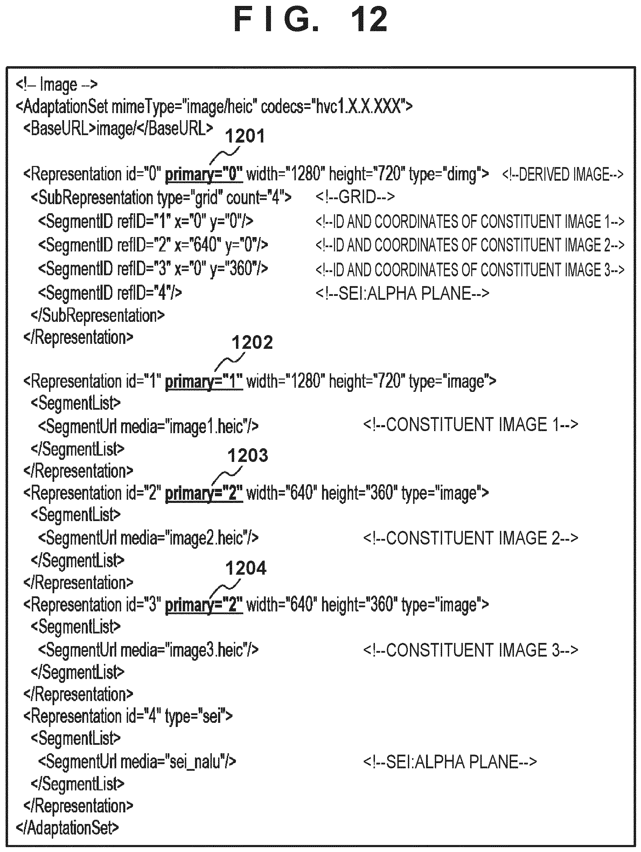

A case in which the alternative information of an item is acquired in step S307 of Fig. 3 will be described next. For example, depending on the capability of a receiving apparatus 200, it may be impossible to display a derived image described in a playlist. A playlist that describes an image to be displayed in place of the derived image in such a case will be described with reference to Fig. 12. Fig. 12 shows an example of a playlist generated by the transmitting apparatus 100 according to the second embodiment, and particularly shows a description example in which an alternative image is indicated by setting priority for an image to be displayed.

Referring to Fig. 12, a derived image is generated from four constituent images and one SEI (Supplemental Enhancement Information: alpha plane). Here, top priority is given to display of the derived image. If the receiving apparatus 200 cannot display the derived image, one of the images forming the derived image is used as an alternative image to be displayed in place of the derived image. In this case, the primary attribute of the derived image is set to top priority, and priority next to that is set for the image to be used as an alternative image. As for the value of the primary attribute, "0" indicates the top priority, and the priority lowers as the number becomes large. In Fig. 12, the value of a primary attribute 1201 of the derived image is set to "0". As the second priority, the value of a primary attribute 1202 of the first constituent image is set to "1". Also, as the third priority, both the value of a primary attribute 1203 of the second constituent image and the value of a primary attribute 1204 of the third constituent image are set to "2". If the values of primary attributes equal, either can be selected.

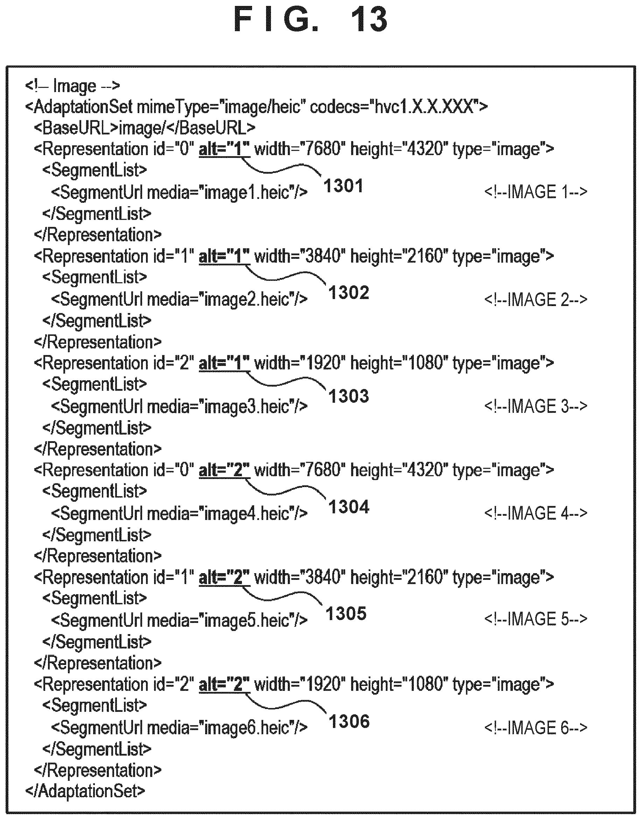

As a method of indicating an alternative image, a case in which not priority but an alternative group is set will be described next with reference to Fig. 13. Fig. 13 shows an example of a playlist generated by the transmitting apparatus 100 according to the second embodiment, and shows a description example in which an alternative group is set for an image. In Fig. 13, a plurality of contents included in an HEIF file include, as alternative groups, groups of images capable of replacing with each other, and relation information represents to which alternative group each of the plurality of images belongs.

Referring to Fig. 13, alternative group attributes 1301 to 1306 are described for images 1 to 6, and groups whose alternative group attribute have the same value are replaceable groups. In Fig. 13, the values of the alternative group attributes 1301 to 1303 are described as "1", and the values of the alternative group attributes 1304 to 1306 are described as "2". Hence, the receiving apparatus 200 can select one of images 1 to 3 and similarly one of images 4 to 6 and use. In the example of the playlist shown in Fig. 13, two alternative groups each including a plurality of images of difference sizes are described. Note that Fig. 13 shows an example in which a plurality of images of different sizes belong to each alternative group. However, the present invention is not limited to this. For example, a plurality of images encoded by different encoding methods may belong to each alternative group. This allows the receiving apparatus 200 to flexibly select an image in correspondence with encoded data that the apparatus supports.

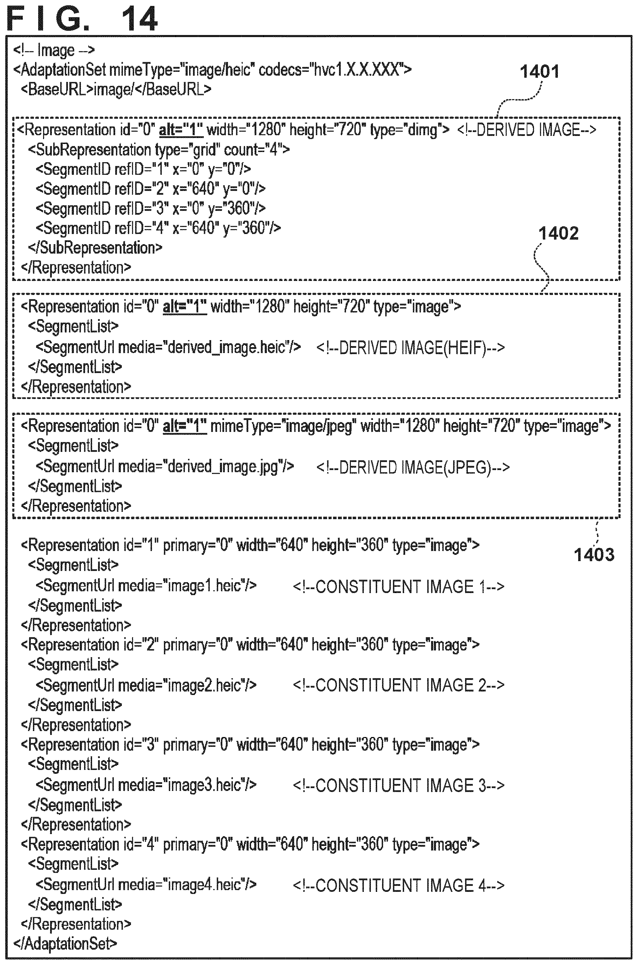

A case in which an already generated derived image is prepared in consideration of a case in which the derived image cannot be displayed on the receiving apparatus 200 will be described next with reference to Fig. 14. Fig. 14 shows an example of a playlist generated by the transmitting apparatus 100 according to the second embodiment, and shows a description example in which a derived image is generated in advance on the side of the transmitting apparatus 100 to enable acquisition of the derived image.

In the playlist shown in Fig. 14, a derived image 1401 is generated from four constituent images, like the description of the derived image in Figs. 10A and 10B. A derived image 1402 is generated by reencoding the derived image 1401 by HEVC as one image. A derived image 1403 is generated by reencoding the derived image 1401 by JPEG as one image. The derived images 1402 and 1403 are generated by an encoded data conversion unit 104. The three derived images are set to the same alternative group (alt=" 1"). Each of the derived images 1402 and 1403 can be the alternative image of the derived image 1401. Hence, the receiving apparatus 200 that cannot generate a derived image from four constituent images can acquire one of the derived image 1402 (HEIF) and the derived image 1403 (JPEG) each of which is generated as one image and use.

As described above, in the second embodiment, relation information concerning a derived image or an alternative image has been exemplified. Note that in the second embodiment, the derived image describing method of displaying one image by combining a plurality of still images has mainly been explained. When the method described in this embodiment is used, it is possible to easily describe a derived image that combines a still image and a moving image, as a matter of course.

### <Third Embodiment>

As the third embodiment, a case in which an image to be displayed is changed in accordance with a reproduction time, like a slideshow, will be described next. Note that the configurations and processes of a communication system and a transmitting apparatus according to the third embodiment are the same as in the first embodiment (Figs. 1, 2, and 3).

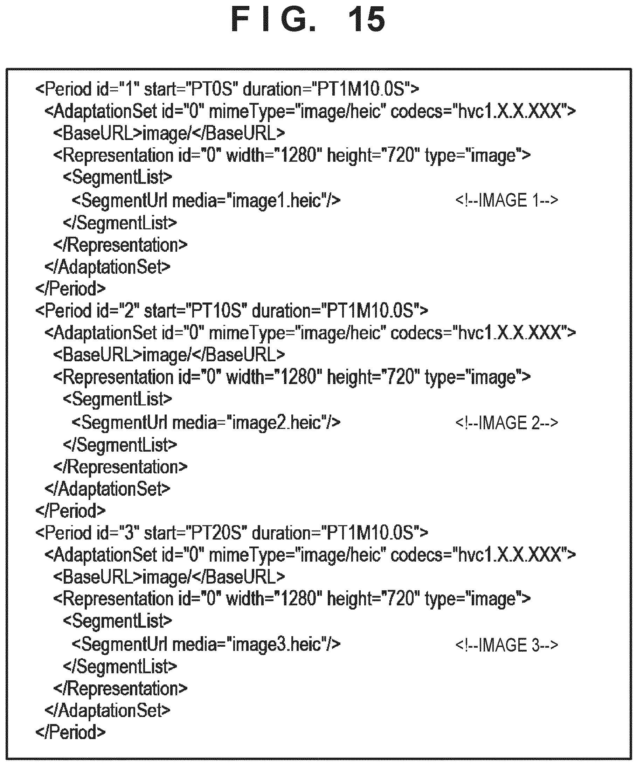

Fig. 15 shows an example of a playlist generated by the transmitting apparatus according to the third embodiment, and particularly shows a description example in which an acquirable image is changed along with the elapse of reproduction time. In Fig. 15, three 10-sec periods (duration="PTIM10.0S") exist, and a different image can be acquired in each period. Hence, a receiving apparatus 200 can acquire a different image in each period and display. In the example of the playlist shown in Fig. 15, each image is displayed for 10 sec in an order of image1.heic → image2.heic → image3.heic.

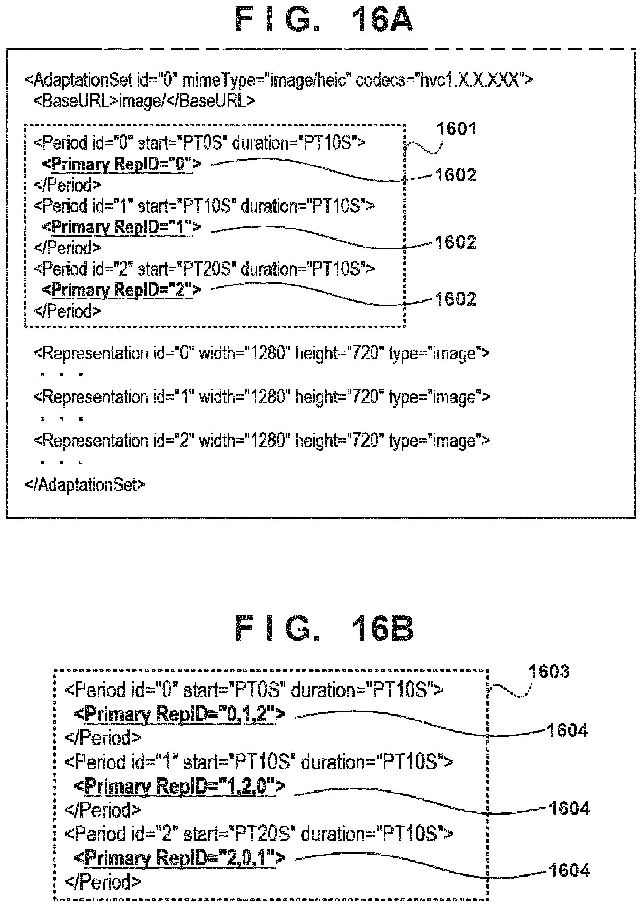

A method of decreasing the description amount of an MPD in correspondence with the case described with reference to Fig. 15 in which an image to be displayed is changed in accordance with reproduction time will be described next with reference to Figs. 16A and 16B. Figs. 16A and 16B show examples of a playlist generated by a transmitting apparatus 100 according to the third embodiment, and particularly show description examples in which an image to be displayed is changed along with the elapse of reproduction time.

If a distributable image is common to a plurality of periods, it is redundant to describe information (attribute information, a URL for acquisition, and the like) concerning the same image for each period. Hence, in Figs. 16A and 16B, pieces of information that are different for each period are collectively described. In Fig. 16A, only information that is different for each period is described in period information 1601. As a priority element 1602, the identifier of Representation of the top priority is described for each period. Note that the priority element describing method is not limited to this. For example, like a priority element 1604 described in period information 1603 shown in Fig. 16B, the identifier of Representation may be described in the descending (or ascending) order of priority for each period. Here, the receiving apparatus 200 that has received an MPD according to the example shown in Fig. 16A or 16B is expected to display the image of the highest priority of the displayable images in each period.

As described above, according to the first to third embodiments, since an HEIF file can be distributed by MPEG-DASH, it is possible to, for example, acquire only a desired still image from an HEIF file or set an acquirable still image for each predetermined time.

### <Fourth Embodiment>

In the fourth embodiment, a receiving apparatus 200 that receives a playlist from a transmitting apparatus 100 described in the first to third embodiments and acquires content (image) from the transmitting apparatus 100 using the received playlist will be described.

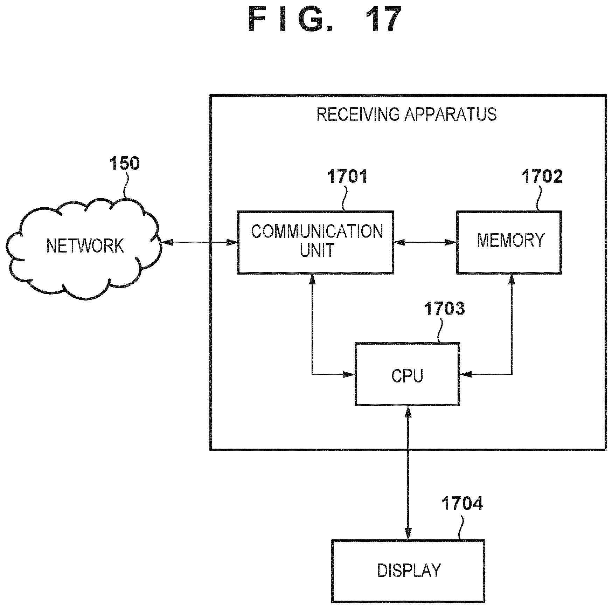

Fig. 17 is a block diagram showing an example of the hardware configuration of the receiving apparatus 200. In the receiving apparatus 200, a communication unit 1701 is connected to a network 150 to perform communication with the transmitting apparatus 100. One or a plurality of memories 1702 store various kinds of programs to be executed by one or a plurality of CPUs 1703. In addition, the memory 1702 provides a work memory when the CPU 1703 executes various kinds of processing. The memory 1702 is a ROM, a RAM, or a hard disk, or a combination thereof. The CPU 1703 executes the programs stored in the memory 1702 and executes various kinds of control. For example, the CPU 1703 receives a playlist from the transmitting apparatus 100, holds it in the memory 1702, acquires an image from the transmitting apparatus 100 using the playlist, and displays the image on a display 1704.

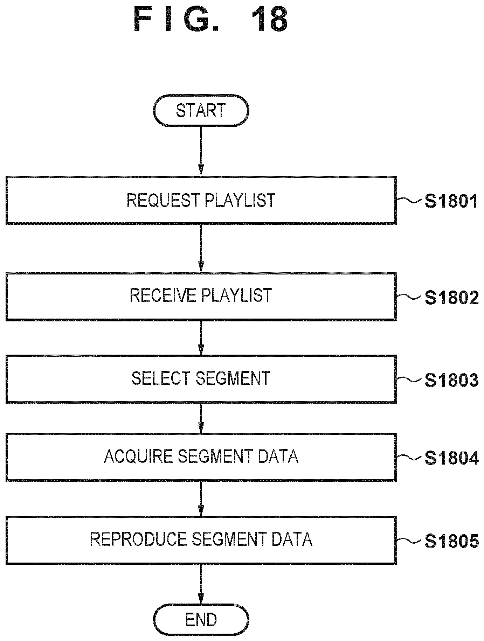

Fig. 18 is a flowchart for explaining acquisition processing of the receiving apparatus 200 acquiring content (image) from the transmitting apparatus 100. In step S1801, the CPU 1703 requests a playlist from the transmitting apparatus 100. In step S1802, the CPU 1703 receives the playlist from the transmitting apparatus 100. The received playlist is held in the memory 1702.

Next, in step S1803, the CPU 1703 selects a desired segment from segments in which the storage destination of the playlist is described. The segment selection may be done based on, for example, a user operation for the receiving apparatus 200, or may be done based on an instruction from an application under execution. Next, in step S1804, the CPU 1703 acquires the data of the segment selected in step S1803 from the transmitting apparatus 100. That is, the CPU 1703 requests, via the communication unit 1701, the data of the segment selected in step S1803 from the transmitting apparatus 100, and receives the data (for example, a still image, a thumbnail image, or the like) of the segment from the transmitting apparatus 100 via the communication unit 1701. Note that the CPU 1703 can acquire the segment from the transmitting apparatus 100 using a URL described in the segment in the playlist. In step S1805, the CPU 1703 reproduces the data acquired in step S1804. For example, the CPU 1703 displays the received still image on the display 1704.

According to the receiving apparatus 200 as described above, for example, the following processing is implemented. Upon receiving the playlist shown in Fig. 4, the CPU 1703 requests the segments of a plurality of thumbnail images, thereby acquiring the plurality of thumbnail images from the transmitting apparatus 100 and displaying these on the display 1704. After that, for example, in accordance with a thumbnail image selection operation by the user, the CPU 1703 requests the segment of a still image corresponding to the selected thumbnail image from the transmitting apparatus 100, acquires the still image as the segment data, and displays it on the display 1704.

In addition, when the CPU 1703 receives the playlist shown in Fig. 10B under the setting for displaying the image of the top priority, the image of the top priority is a derived image (grid image). Hence, the CPU 1703 receives four images by requesting necessary segments of the image in accordance with the description of the derived image, generates a grid image, and displays it on the display 1704. When the playlist shown in Fig. 15, 16A, or 16B of the third embodiment is used, the receiving apparatus 200 can sequentially display a plurality of files included in an HEIF file like a slideshow.

As described above, the receiving apparatus that has received a playlist according to the first to third embodiments can selectively receive a necessary item in a plurality of items included in the HEIF file without receiving the whole HEIF file including the plurality of items.

### <Other Embodiments>

The embodiments have been described above in detail. The present invention can take an embodiment of, for example, a system, an apparatus, a method, a program, or a recording medium (storage medium). More specifically, the present invention may be applied to a system formed by a plurality of devices (for example, a host computer, an interface device, an image capturing apparatus, a web application, and the like), or may be applied to an apparatus formed by a single device.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims the benefit of Japanese Patent Application No. 2019-211706, filed November 22, 2019, which is hereby incorporated by reference herein in its entirety.

## Claims

1. A data processing apparatus **characterized by** comprising:
acquiring means for analyzing a file of a predetermined format including a plurality of contents and acquiring the plurality of contents and relation information representing a relationship between the plurality of contents;
storage means for storing the plurality of contents acquired by the acquiring means;
generating means for generating a playlist that describes acquisition information used to individually acquire the plurality of contents from the storage means and the relation information; and
communicating means for transmitting the playlist to an external apparatus and transmitting, to the external apparatus, content that the external apparatus requests using the acquisition information included in the playlist.

2. The data processing apparatus according to claim 1, **characterized in that**
the storage means stores each of the plurality of contents as one file including encoded data and decode information necessary for decoding of the encoded data, and
the acquisition information is information used to acquire the one file from the storage means.

3. The data processing apparatus according to claim 1 or 2, **characterized in that**
for each of the plurality of contents, the storage means separately stores the encoded data obtained by encoding the content and the decode information necessary for decoding of the encoded data, and
the acquisition information includes information used to acquire, from the storage means, information used to acquire the encoded data, and information used to acquire the decode information from the storage means.

4. The data processing apparatus according to any one of claims 1 to 3, **characterized in that**
the plurality of contents include a still image and a thumbnail image corresponding to the still image, and
the relation information includes information representing correspondence between the still image and the thumbnail image.

5. The data processing apparatus according to any one of claims 1 to 4, **characterized in that**
the plurality of contents include a plurality of still images, and
the relation information includes information representing priority of the plurality of still images.

6. The data processing apparatus according to any one of claims 1 to 5, **characterized in that**
the plurality of contents include an image and metadata associated with the image, and
the relation information includes information representing correspondence between the image and the metadata.

7. The data processing apparatus according to any one of claims 1 to 6, **characterized in that**
the plurality of contents include a plurality of images, and
the relation information represents a derived image derived from the plurality of images.

8. The data processing apparatus according to claim 7, **characterized in that** the derived image is a grid image displayed by arranging the plurality of images.

9. The data processing apparatus according to claim 7, **characterized in that** the derived image is an overlay image displayed by overlaying the plurality of images.

10. The data processing apparatus according to any one of claims 7 to 9, **characterized in that** the plurality of contents include an alpha plane associated with at least one of the plurality of images to be used to generate the derived image.

11. The data processing apparatus according to any one of claims 7 to 10, **characterized in that** the relation information includes information for designating priority for the derived image and the plurality of images.

12. The data processing apparatus according to any one of claims 7 to 11, **characterized by** further comprising generating means for generating the derived image as one image,
wherein the storage means stores the image generated by the generating means such that the image can be acquired from the external apparatus,
the acquisition information includes information used to acquire the image generated by the generating means, and
the relation information represents that the image generated by the generating means is an alternative image of the derived image.

13. The data processing apparatus according to any one of claims 1 to 6, **characterized in that**
the plurality of contents include a plurality of images, and
the relation information represents an alternative group to which each of the plurality of images belongs.

14. The data processing apparatus according to claim 1, **characterized in that**
the plurality of contents include a plurality of images, and
the relation information represents an acquirable time of each of the plurality of images.

15. The data processing apparatus according to claim 14, **characterized in that** the relation information represents that there exist a plurality of images acquirable in each acquirable time, and priority of the images in each time.

16. The data processing apparatus according to any one of claims 1 to 15, **characterized in that** the predetermined format is HEIF (High Efficiency Image File Format).

17. A data processing apparatus **characterized by** comprising:
receiving means for receiving the playlist transmitted by the communicating means of a data processing apparatus defined in any one of claims 1 to 16;
requesting means for requesting transmission of a necessary content from the data processing apparatus using the acquisition information and the relation information described in the playlist; and
processing means for receiving the content transmitted from the data processing apparatus in response to the request of the requesting means and processing the content.

18. A method of controlling a data processing apparatus, **characterized by** comprising:
an acquiring step of analyzing a file of a predetermined format including a plurality of contents and acquiring the plurality of contents and relation information representing a relationship between the plurality of contents;
a storage step of storing, in storage means, the plurality of contents acquired in the acquiring step;
a generating step of generating a playlist that describes acquisition information used to individually acquire the plurality of contents from the storage means and the relation information; and
a communicating step of transmitting the playlist to an external apparatus and transmitting, to the external apparatus, content that the external apparatus requests using the acquisition information included in the playlist.

19. A method of controlling a data processing apparatus, **characterized by** comprising:
a receiving step of receiving the playlist transmitted by executing a method of controlling a data processing apparatus defined in claim 18;
a requesting step of requesting transmission of a necessary content from the data processing apparatus using the acquisition information and the relation information described in the playlist; and
a processing step of receiving the content transmitted from the data processing apparatus in response to the request in the requesting step and processing the content.

20. A program configured to cause a computer to function as means of a data processing apparatus defined in any one of claims 1 to 17.
